# EUROPEAN PATENT SPECIFICATION

(11) **EP 1 368 720 B1**
(45) Date of publication and mention of the grant of the patent: **18.03.2009**
(21) Application number: 01961276.1
(22) Date of filing: 31.08.2001
(51) Int. Cl.: G06F 21/00

(54) **METHOD AND SYSTEM FOR CONTENT DISTRIBUTION AND FEES MANAGEMENT**
VERFAHREN UND VORRICHTUNG ZUR VERTEILUNG VON SOFTWARE UND ZUR VERWALTUNG VON GEBÜHREN
PROCÉDÉ ET SYSTÈME DE DISTRIBUTION DE CONTENUS ET DE GESTION DE LEURS FRAIS

(30) Priority: 01.09.2000 JP 2000266155; 30.08.2001 JP 2001261736
(43) Date of publication of application: 10.12.2003
(73) Proprietor: Sony Computer Entertainment Inc., Tokyo 107-0052 (JP)
(72) Inventor: KUTARAGI, Ken, Minato-ku, Tokyo 107-0052 (JP); OKAMOTO, Shinichi, Minato-ku, Tokyo 107-0052 (JP); SHIMAKAWA, Keiso, Minato-ku, Tokyo 107-0052 (JP); OKADA, Toyoshi, Minato-ku, Tokyo 107-0052 (JP); SHIMADA, Muneki, Minato-ku, Tokyo 107-0052 (JP); HASHIMOTO, Minoru, Minato-ku, Tokyo 107-0052 (JP)
(74) Representative: Manitz, Finsterwald & Partner GbR
(86) International application number: PCT/JP2001/007561
(87) International publication number: WO 2002/019071

(56) References cited:
- EP-A- 0 665 486
- EP-A- 0 837 383
- WO-A2-97/30575

## Description

### BACKGROUND OF THE INVENTION

### 1. Field of the Invention

The present invention relates to a technique for distributing contents which includes, for example, game programs, video signals, image data, sound data, music data, character information or the composition of them, especially to a technique for managing fees arising from distributing or utilizing these contents, and particularly relates to a method, system and computer program of the kind as defined in the preamble of claim 1, claim 3 and claim 5, respectively. A method and system of the respective kind is disclosed in EP-A-0 837 383.

### 2. Description of the Related Art

Along with the popularization of the internet, distributing contents to numbers of people is becoming easier. Recently, pay services of distributing contents are implemented actively. However, in the case that pay contents is transacted through the wide-area network like the internet to which general public people can access, it is difficult to set charge fee properly, because it is hard to figure out how much the pay contents is utilized.

To solve such problems, the techniques for distributing contents were conventionally proposed, which are described below.
(1) Data Communication System (Japan Laid-Open Patent Publication No. No.2000-281963:"First Prior Art")
   In this system, an information recording medium storing a data communication program is sold. User buys this information recording medium, and install the data communication program to the user's PC (Personal Computer) to run this program. After that, the communication line between the user's PC and the apparatus holding pay contents is automatically established, and the user can obtain any contents through this communication line by request. Thus, distributing pay contents with the security of the contents being maintained can be achieved in a simple manner. Additionally, charging operation etc. can be easily managed.
(2) Information Distributing System (Japan Laid-Open Patent Publication No.11-328850:"Second Prior Art")
   In this system, a first encryption key and contents encrypted using the first encryption key are transmitted from a server to a user terminal (user machine). At the user terminal side, the encrypted contents are decrypted using the first encryption key. At the same time, charging operation of the contents is executed. Furthermore, a code which varies dynamically along with the elapsed time (DA code) is accompanied with the first encryption key. Therefore, it is possible to prevent the incorrect use of contents and to put a predetermined restriction on the use of contents.

According to these prior arts described above, the utilizing condition of contents can be figured out. And, these prior arts have an advantage of clarifying charging system.

However, according to the first prior art, the information recording medium per each content is needed to be prepared and sold, and according to the second prior art, managing DA code is bothersome. Consequently, according to these prior arts, the problem remains such that these prior arts cause inflation of costs. Additionally, according to the first prior art, one can monitor the utilizing condition of contents only when the contents is distributed.

The ways of distributing contents become more diverse, and contents themselves may be created in a wide variety such as program, data and so on. Therefore, it is difficult to monitor the utilizing condition of contents using the conventional uniform technique.

On the other hand, it is reasonable that the contents provider should install the system of monitoring the utilizing condition of contents separately corresponding to demand of the contents.

EP-A-0 837 383 discloses a method for data verification wherein an information processing unit is used for utilizing digital information (contents) in the user environment. The digital information (contents) utilized by the user's information unit is stored in an information holding unit of the user' information unit which can be provided in the form of an external storage device like a memory or a hard disc device. The user's information unit further comprises a control unit and a history holding unit for storing a utilization history from a token via the control unit. On receiving a corresponding command from the control unit, an information transmission unit reads out the history held in the history holding unit together with the utilization history transferred from the control unit, and transmits the history to a recovery unit of a center. The information transmission unit may be provided in the form of a network interface such as Ethernet. The token performs predetermined processing according to an instruction from the information processing unit and returns result thereto. In particular, the token comprises a decryptor unit for decrypting the encrypted digital information (contents) from the information processing unit and reading a header of the encrypted data for returning an information identifier written thereto to the processing unit as the utilization history. The information identifier is an identifier peculiar to the information given when the center encrypts the information for distribution. The information identifier is controlled by the center, and when the information identifier is specified it is possible to specify a person who has prepared the information. The recovery unit of the center is associated with a history reception unit and causes this history reception unit of the center to receive the history sent from the information processing unit of the user. During the communication between the information processing unit and the token on the user side, the control unit of the information processing unit performs several processes including issuing a verification value output command to the token on receiving an instruction from the user and transferring the utilization history provided with a digital signature to the information transmission unit. The digital information is distributed via the information holding unit in the form of an external storage device like a memory or a hard disc device. The center normally calculates information utilization fees in accordance with the contents of the history, collects the fees from users and performs the process of distributing the utilization fees thus collected among information providers according to details of an information utilization history.

EP-A-0 665 486 discloses a method of protecting electronically published documents using cryptographic protocols. With this known method requests for documents received from users having computers with display devices or printers are authenticated by a copyright server. Uniquely encoded and encrypted documents are created by a document server for each authenticated request and sent to the users. Critical programs are required to be executed under the user control to display and print the documents. The necessary software for the decryption of the encrypted documents is provided by display agents and printing agents which are sent to the users by the copyright server and transmitted with each document. Nevertheless, the display and printing operation is under the control of the users. Secret keys are provided by the users to the display or printing agents. The encrypted documents are decrypted at each of the agents and the documents are made available for use only in response to receiving correct secret keys provided by the authenticated request user to the agents.

WO-A-97/30575 discloses a system for enabling licensed software comprising a client module that is attachable to a software application which is loaded on a computer having access to a public network, and a license server containing software application license records, which license server is accessible over the public network. The client module communicates with the licence server over the public network to determine the existence of a license record corresponding to the software application. The communication between the computer and the licensing server is generally transparent to a user, i.e., the client module automatically forms a connection with the license server, sends a message, and receives a response, all without user input or notification. The operation of an exemplary embodiment used for monitoring client application involves using the client module in the client application to generate messages that are sent to the licensing server. Therefore, the client application including the software application and the attached client module and being loaded on the computer automatically reports to the license server. The license server tracks or audits the use of client applications by recording pertinent information contained in a message generated by the client module. Therefore, audit data is derived from license inquiry request messages. A respective use of the application or a respective activity is only recorded by the file server computer having installed therein a respective licensing module. Collected audit data are stored by the license server. The disclosed enabling system as a whole can take the form of a downloadable package. An exemplary embodiment of the known system comprises a library of code modules suitable for inserting into a predetermined precompiled version of the software application, with the library of code modules including a client module that transparently generates and sends and receives messages to and from the license server. The library of code modules may include a watchdog timer for initiating a license validity inquiry upon expiration.

Therefore, it is a main object of the present invention to provide a method for managing fees of contents and a system suitable for carrying out this method in which the fees arising from distributing or utilizing contents can be managed properly.

### SUMMARY OF THE INVENTION

According to one aspect of the present invention, there is provided a method for managing fees of contents in which the fees arise based on a predetermined charging rule upon utilizing the contents, said method comprising the steps of:
issuing a recording medium to a user operating a user terminal which carries out information processing by utilizing said contents, said recording medium having a data recording area in which user identification data is recorded and a nonvolatile memory area;
equipping information gathering means on a network with which said user terminal with said recording medium being loaded is allowed to connect;
and said method being **characterized in that** it further includes the steps of:
embedding digital information to said contents;
processing a plurality of said contents, in each of which digital information is embedded, to one archive data;
encrypting said archive data and adding an attribute data to the encrypted archive data;
distributing said archive data and attribute data through a predetermined distribution frame;
the step of embedding digital information to said contents comprises: said digital information itself causing said user terminal to store a contents utilizing history indicating utilizing condition of the contents to said nonvolatile memory area of said recording medium, with said contents utilizing history being stored permanently as long as said contents is utilized, and to read said stored contents utilizing history so as to automatically transmit said contents utilizing history to said information gathering means along with said user identification data at a predetermined timing while said user terminal is connected with said network;
counting a utilization condition of the contents per user based on the contents utilizing history and the user identification data gathered through said information gathering means; and
determining a charging amount per user based on said counted utilization condition and a charging rule for said contents.

The "digital information" is, for example, a program which is read out by the user terminal and executes processes according to the procedure described above, call data capable of executing processes according to the procedure described above by recalling a particular function of an OS (Operating System), etc. and is embedded in an area which does not cause any problem in utilizing the contents. The digital information may be prepared separately in correspondence with the type of the contents, and usually, may be changed ad hoc in correspondence with a demand for the contents at the time of preparing the contents.

The information gathering means can, e.g., be provided in form of an information gathering server.

The recording medium is individualized per user. The method comprises the steps of recording the contents utilizing history indicating the utilizing condition of contents and the user identification data in the recording medium until the user terminal is connected with the network, gathering these contents utilizing history and user identification data by the information gathering means at the predetermined timing, and determining the charging amount per user by counting the utilization condition of contents per user based on the gathered information.

According to the method of managing fees of contents, since the necessary information is gathered automatically triggered by connecting the user terminal with the network, it is possible to manage in terms of fees of contents with more practical manner.

For ensuring the security of the contents, it may be arranged that the contents are encrypted and key information for decrypting the encrypted contents is issued as being recorded in the recording medium.

According to another aspect of the present invention, there is provided a system for managing fees of contents in which the fees arise based on a predetermined charging rule upon utilizing the contents, said system comprising issuing means for issuing a recording medium to a user operating a user terminal which carries out information processing by utilizing the contents, the recording medium having a data recording area in which user identification data is recorded and a nonvolatile memory area; and information gathering means provided on a network with which the user terminal with the recording medium being loaded is allowed to connect; and said system being characterized by distributing means for embedding digital information to the contents, for processing a plurality of said contents, in each of which digital information is embedded, to one archive data, for encrypting said archive data and adding an attribute data to the archive data, encrypted
and for distributing said archive data and attribute data through a predetermined distribution frame;
identification information holding means for holding identification information for identifying said distributed contents;
said digital information itself causing said user terminal to store a contents utilizing history indicating utilizing condition of the contents to said nonvolatile memory area of said recording medium, with said contents utilizing history being stored permanently as long as said contents is utilized, and to read said stored contents utilizing history so as to automatically transmit said contents utilizing history to said information gathering means along with said user identification data at a predetermined timing while said user terminal is connected with said network;
counting means for counting a utilization condition of the contents per user based on the contents utilizing history and the user identification data gathered through said information gathering means and the identification information held by said identification information holding means; and
fee calculating means for determining a charging amount per user based on said counted utilization condition and a charging rule for said contents.

In the system for managing fees of contents, the recording medium may be a card equipped with an IC chip which is individualized per user, and information indispensable for utilizing the contents may be recorded in the card.

### BRIEF DESCRIPTION OF THE DRAWINGS

The present invention will be understood more fully from the detailed description given hereinbelow, taken in conjunction with the accompanying drawings.
Fig. 1 is a block diagram showing an overall structure of the contents distributing system in which the present invention is applied.
Fig. 2 is a functional block diagram of an information service server according to the preferred embodiment of the present invention.
Fig. 3 is a functional block diagram of a managing server according to the preferred embodiment of the present invention.
Fig. 4 is a functional block diagram of a settlement operating server according to the preferred embodiment of the present invention.
Fig. 5 is a functional block diagram of a member card (IC card) according to the preferred embodiment of the present invention.
Fig. 6 is a diagram showing a treatment of the contents according to the preferred embodiment of the present invention.
Fig. 7 is a diagram showing an example of description for recording a message in which a function of one example of a middleware is embedded, to the member card, wherein (a) represents an example of the function, and (b) represents an example of a parameter.
In Fig. 8, (a) is a diagram showing a parameter which is an example of a header in the case that a tag is included in a data packet of the contents, and (b) is a diagram showing a relationship between the contents and the tag.
Fig. 9 is a block diagram showing procedures of one example of an operation mode according to the preferred embodiment of the present invention.

### DESCRIPTION OF THE PREFERRED EMBODIMENT

Now, a contents distributing system according to a preferred embodiment of the present invention will be described with reference to the accompanying drawings.

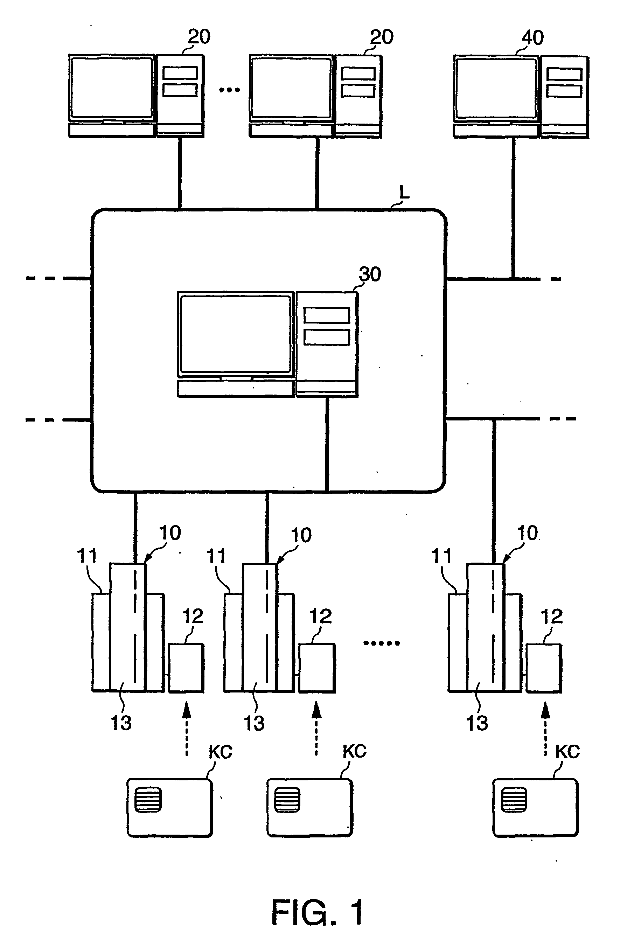

Fig. 1 is a block diagram showing an overall structure of the contents distributing system in which the present invention is applied.

In this contents distributing system, information service servers 20, which are examples of distributing structures, distribute contents to user terminals 10 each of which is connected to an internet L. A managing server 30, which comprises a main element of a system for managing fees of contents according to the present invention, gathers information indicating the distributing condition and the utilizing condition of the contents, and fees arising from distributing or utilizing the contents are managed based on the gathered results.

A settlement operation server 40 and a financial system not shown in the drawings are also connected with the internet L. In collaboration of the settlement server 40 and the financial system, a settlement operation is executed based on the fees for the contents distributed from the managing server 30.

In this embodiment, a service manager carrying out a service for managing fees of contents is set to a manager of the managing server 30 and the settlement processing server 40.

In this embodiment, only a member user can enjoy the advantage derived from utilization of contents.

In other words, only the user who is registered in the managing server 30 and receives an issued member card KC can utilize the contents. The member card KC is an individualized card per each user with an IC chip being loaded (a contact/non-contact type IC card, a hybrid type IC card etc.) or a memory card. The member card KC is issued by a card issuing apparatus equipped by a service manager, usually a managing agency of the managing server 30.

Also, in the present embodiment, the user, the creator of the contents (licenser of the contents) and the distributor of the contents (licensee of the contents) can enjoy benefits gaining from receiving service information such as information of utilizing contents based on the distribution condition and the utilizing condition of the contents, etc. The distributor of the contents is, usually, the manager of each information service server 20.

Furthermore, the creator of the contents can enjoy a benefit gaining from determination and collecting royalties of the contents.

### <User Terminal>

The user terminal 10 comprises a local storage device 11 which includes a hard-disk drive (HDD), a card control mechanism 12 which is detachably mounted with the member card KC and controls recording of information to the member card KC and reading of information recorded in the member card KC, and a main control portion 13 which carries out a required information processing utilizing the information recorded in the member card KC and the contents distributed by the information service server 20. Furthermore, the user terminal 10 is connected with a display device which is not shown in the drawings.

In this user terminal 10, the contents are activated only when the member card KC is mounted on the user terminal 10. In the case that the contents is a program, the program is decoded partially after installation of the program, and the member card KC is necessary for startup of the program.

The card control mechanism 12 is a card reader/writer in the case that the member card is a card equipped with an IC chip, and in the case that the member card is a memory card, the card control mechanism 12 is a control mechanism of the memory card.

The main control portion 13 performs authentication process, information recording/reading-out, and process for information transmission in cooperation with a variety of functions generated in the member card KC.

An entertainment device (PS2 etc.) which is equipped with a communication function and is supplied by Sony Computer Entertainment Inc. (Japan) is connected with a hard-disk (and/or a memory card) and a display device, and as a result of that, the entertainment device can be utilized as the above-mentioned user terminal 10. In the case that a card equipped with an IC chip is utilized as the member card KC, the entertainment device is connected with a card reader/writer.

### <Information Service Server>

The information service server 20 is realized by cooperation of a server body as an example of a computer system and a computer program read and executed by the server body. The computer program may be recorded in a CD-ROM, DVD-ROM, semiconductor memory or other recording medium, or may be loaded into a storage device of the server body via the internet L.

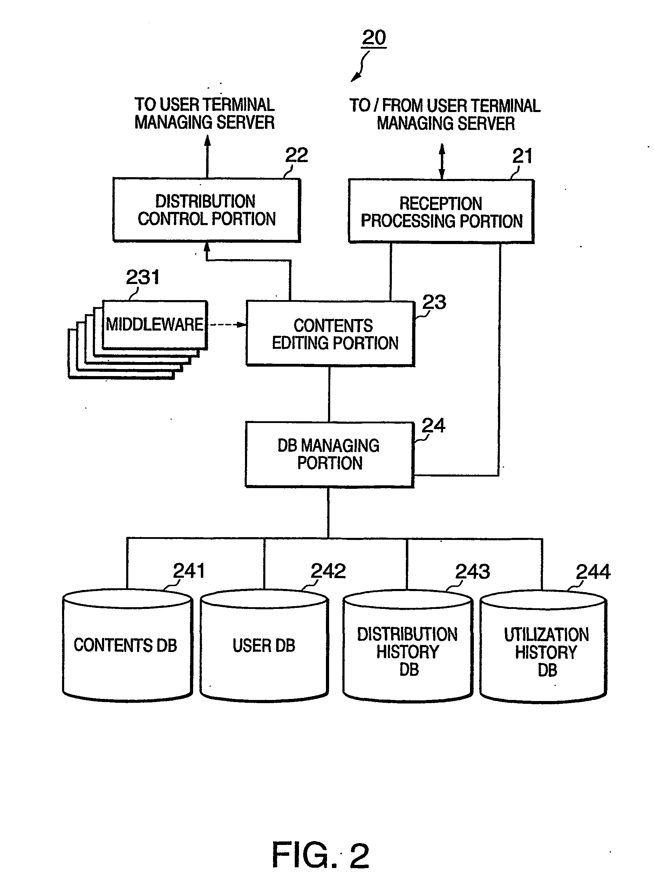

In this embodiment, as shown in Fig. 2, the execution of the computer program creates in the server body functions of a reception processing portion 21, a distribution control portion 22 which distributes contents to the user terminal 10 of the user who desires the contents to be distributed, a contents editing portion 23 which processes and edits the contents intended for distribution, a contents DB 241 (DB is the abbreviation for a database, and hereafter the database is referred to as "DB") in which the contents is stored, a user DB 242 in which user information is stored, a user distribution history DB 243 in which a history of contents distribution to users is stored, a utilization history DB 244 in which a history of utilization of contents distributed from the managing server 30, and a DB managing portion 24 which primary controls recording data to these DB 241-244 and reading data from these DB 241-244.

The reception processing portion 21 receives a demand for contents from the user terminal 10, information for utilizing contents from the managing server 30, and so on. The distribution control portion 22 distributes contents to each user terminal 10. In the case that the distribution control portion 22 distributes contents to the user terminal 10, the distribution control portion 22 notify the managing server 30 of the history of distribution, and the distributor ID which uniquely identifies the contents distributor, who is usually the manager of the information service server 20.

A contents editing portion 23 edits the contents to provide a data structure suitable for distribution through network. And a contents editing portion 23 embeds a middleware described later in the contents, if necessary.

### <Managing server>

The managing server 30 is a server which centrally controls all information with respect to contents distribution and fees, and is realized by cooperation of a server body as an example of a computer system and a computer program read and executed by the server body. The computer program may be recorded in a CD-ROM, DVD-ROM, semiconductor memory or other recording medium, or may be loaded into a storage device of the server body via the internet L.

The server body has a function of two-way communication toward all information processing device and communication device (including user terminal 10) connected with the internet L. Furthermore, the managing server 30 is connected with a card issuing device which issues the member card KC for managing the member user. The card issuing device has a function of sending/receiving data in conjunction with a user master DB 34 described later.

The contents to be delivered can be created in the managing server 30, and embedding the middleware described later in the contents, compressing the contents to an archive, and encrypting the contents can be processed in the managing server 30. Alternatively, above-described processes such as embedding etc. can be done in the managing server 30 after receiving the contents from the contents creator ad libitum. Alternatively, after the contents are distributed from the contents creator to the contents distributor (licensee), above-described processes can be done in the information service server 20. In the case that the contents are created in a place other than the managing server 30 and delivered to the managing server 30 after above-described processes such as embedding etc. are done, this managing server 30 manages the contents under receiving a notification of a detail of the contents.

From now on, the simplest example in which the contents are distributed from the contents creator to the information service server 20, the contents editing portion 23 executes above-described process such as embedding etc., and the managing server 30 receives a notification of above-described processes will be described.

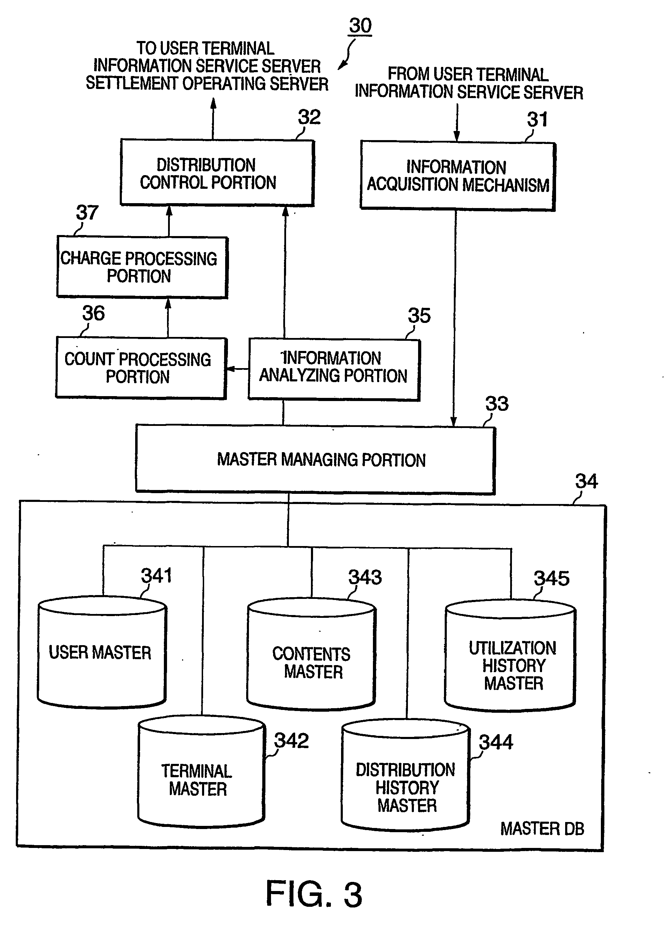

In this embodiment, functions or mechanisms as shown in Fig. 3 are created through execution of the computer program by the server body. Specifically, there are created an information acquisition mechanism 31 which acquires a history of distribution of all contents which are created by the contents creator and distributed through the information service server 20 to the user, a history of utilization of contents which indicates a utilizing condition of contents, and a variety of notification information, a distribution control portion 32 which controls distribution of a variety of information in terms of contents distribution toward the user terminal 10, information service server 20 and the settlement processing server 40, a master managing portion 33 which manages master DB 34, an information analyzing portion 35 which analyzes information recorded in the master DB 34, a count processing portion 36 which counts distribution condition of contents per each content and utilizing condition of contents per each user, and a charge processing portion 37 which processes charging to a manager of the information service server 20 and users. The information acquisition mechanism 31 serves as an interface between the internet L and the server body and is realized by cooperation with a hardware element such as a communication port. The information acquisition mechanism 31 may be replaced with an independent server (information acquisition server) which is operable by a computer program.

The master DB 34 comprises a user master 341, a terminal master 342, a contents master 343, a distribution history master 344, and a utilization history master 345.

In the user master 341, personal information of each user registered as member user is recorded in correspondence with a user ID as a user identification data. Furthermore, information of contents creator (licensor) and contents distributor (licensee) is recorded. Relevant information is added if necessary.

In the terminal master 342, information such as a serial number of the user terminal of a registered user etc. is recorded in correspondence with a terminal ID as a terminal identification data and the user ID. Furthermore, information regarding the information service server 20 is recorded in correspondence with a distributor ID.

In the contents master 343, each contents identification data (contents ID) distributed from the information service server 20 is recorded in correspondence with the user ID and/or the terminal ID. Moreover, the contents master 343 includes a charging rule table in which a charging rule for utilization of contents is recorded.

The charging rule is a rule defining a relationship between an action by the contents distributor or the user and a charging unit price of the contents. The charging unit price includes a distribution unit price of contents between single user/distributor or between a group of users and a group of distributor, a utilization unit price of contents per each user or per a group of users, and a utilization unit price by a particular character or item included in the contents. More specifically, the charging rule is a rule such that "in the case of game program, a royalty is determined as an amount of the number of days during user's play multiplied by the utilization unit price."

In the distribution history master 344, each gathered distribution history is recorded in correspondence with the distributor ID identifying the content distributor, the contents ID and/or the user ID.

In the utilization history master 345, each gathered history of utilizing contents is recorded in correspondence with the contents ID and/or the user ID.

The information analyzing portion 35 carries out various kinds of analysis based on the recorded details of all DB recorded in the master DB 34. For example, the information analyzing portion 35 specifies the contents, the contents distributor who distributes this contents and the user who utilizes this contents based on the history of the utilization of contents per each content recorded in the utilization history master 345, analyzes how much the particular contents is utilized by one user, and generates utilization information per each contents. And, if it is not necessary to identify user's personal information, for example, it is sufficient only to identify times of distribution or utilization of contents, the information analyzing portion 35 generates the utilization information regarding the times of utilization of contents.

Furthermore, the information analyzing portion 35 can analyze such as how much the particular contents are utilized by one user's age bracket, based on the user's personal information etc.

A result of analysis by the information analyzing portion 35 is distributed on-line (via the information service server 30 and/or the user terminal 10) or off-line (by mail etc.) to the contents creator, the contents distributor, and the users. Moreover, the result of analysis by the information analyzing portion 35 is sent to the count processing portion 36 for charging process.

The count processing portion 36 counts the information such as the distribution condition of contents per distributor ID, the distribution condition per contents ID, the utilization condition of contents per user ID etc. by a predetermined period such as a month, based on the result of analysis by the information analyzing portion 35. A result of count is sent to the charge processing portion 37.

The charge processing portion 37 generates charge information for each of the user, the contents distributor (licensee), and the contents creator based on the count information counted by the count processing portion 36 and the charging rule recorded in the charging rule table, and transmits the charge information to the settlement processing server 40.

The charge information includes information about a charge (royalty), amount of which is determined regarding the distribution of the contents, a charge (a price of utilization or purchase), amount of which is determined regarding the utilization of contents, a charge (a value for a service), amount of which is determined regarding the offering of the utilization information of contents, and so on. The charge information is generated and sorted per corresponding addressee (user, distributor, creator etc.).

### <Settlement processing server>

The settlement processing server 40 is realized by cooperation of a server body as an example of a computer system and a computer program read and executed by the server body. The computer program may be recorded in a CD-ROM, DVD-ROM, semiconductor memory or other recording medium, or may be loaded into a storage device of the server body via the internet L.

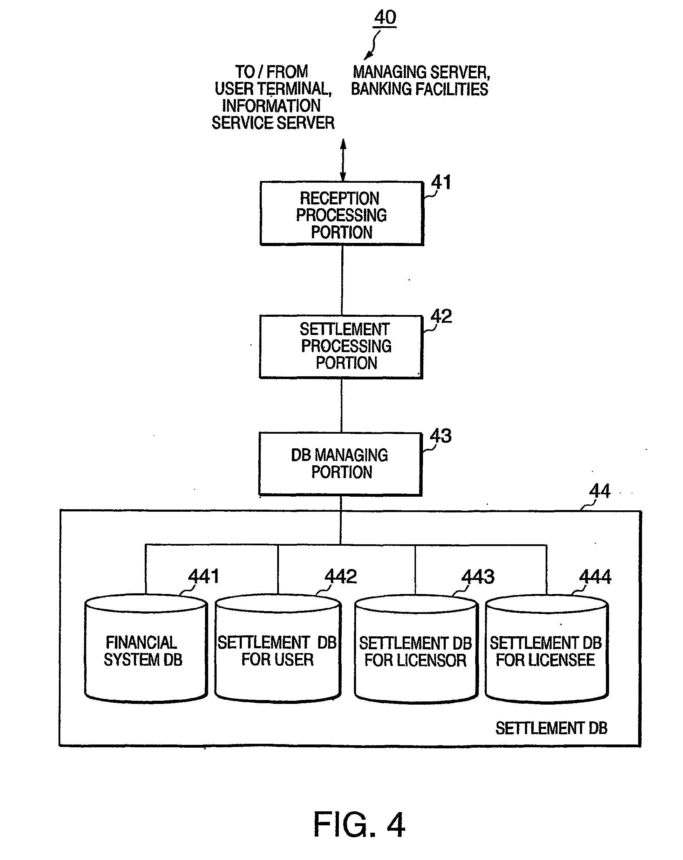

In this embodiment, the settlement processing server 40 executes settlement processing for corresponding addressees based on the charging information sent from the managing server 30. In general, the settlement processing server 40 executes settlement processing regarding the price of utilization or purchase for the user, the royalty for the contents distributor and the value for the service for the contents creator. For that purpose, as shown in Fig. 4, the settlement processing server 40 comprises a reception processing portion 41, a settlement processing portion 42 which issues bills and confirms an amount of money received, and a DB managing portion 43 which controls information recording to a settlement DB 44 and reading out the information from the settlement DB 44, which are created through execution of the computer program.

More specifically, the settlement DB 44 comprises a financial system DB 441 in which information of the financial system managed by the banking facilities which the user, the contents creator and the contents distributor are using, and a history of credit advices from the banking facilities etc. are recorded, a settlement DB for user 442 in which an amount claimed (information about whether the debit note is issued or not may be included) and an amount of credit advices from the banking facilities are recorded per user, a settlement DB for the licensor 443 in which an amount claimed (information about whether the debit note is issued or not may be included) and an amount of credit advices from the banking facilities are recorded per contents creator (licensor), and a settlement DB for the licensee 444 in which an amount claimed (information about whether the debit note is issued or not may be included) and an amount of credit advices from the banking facilities are recorded per contents distributor (licensee).

The reception processing portion 41 receives the charging information from the managing server 30 and the advices of credit from the associating banking facilities, and issues the debit note to the corresponding user terminal 10 and the corresponding information service server 20.

### <Member card>

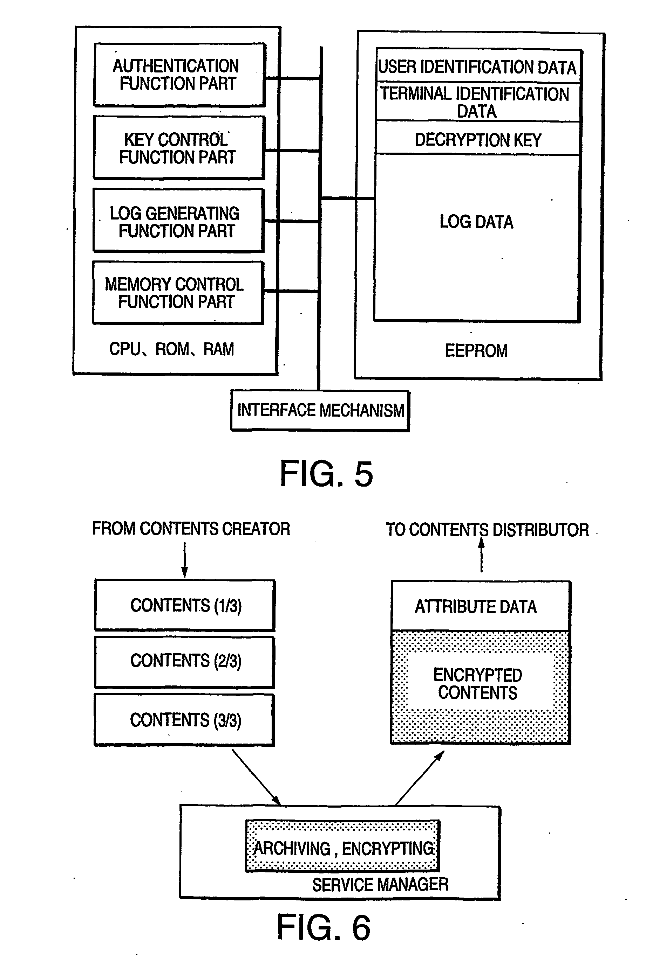

Fig.5 is a block diagram of the functional structure of the member card KC in the case that IC card is used as the member card KC.

This member card KC is constructed by both of an interface mechanism for connecting with the card reader/writer 12 provided on the side of user terminal 10 and IC chip equipped in a card-form medium of a standard size.

The IC chip is connected with a CPU (Central Processing Unit), a ROM (Read Only Memory), a RAM (Random Access Memory), and an EEPROM (Electrically Erasable Programmable Read Only Memory) via an internal bus. In the EEPROM, a key area for recording a decryption key, a data recording area for recording data such as the user ID as the user identification data, the terminal ID as the user terminal identification data, a data indicating that the contents is dealt properly etc., and a log area for storing a log data as one of the history of utilization of contents are generated.

However, the log data is only an example, and the history of utilization of contents other than the log data is recorded in the EEPROM.

By executing a program recorded in the ROM, an authentication function part, a key control function part, log generating function part and a memory control function part are generated in the CPU.

The member card KC is used for authenticating the user terminal 10 and for authenticating whether the contents utilized in this user terminal 10 is proper or not. Moreover, the member card KC stores the log data indicating the condition of utilization of contents, based on an instruction of the contents side. While the user terminal 10 is connected with the internet L, the stored log data is automatically read out and is transmitted to the managing server 30 along with the user identification data and the terminal identification data.

### <Operation Mode>

Next, an operation mode of the contents distributing system described above will be explained.

In this embodiment, as shown in Fig. 6, a plurality of contents created by the contents creator is processed to one archive data (digital archive) and the one archive data is encrypted. After that, the encrypted data is distributed toward the user after adding an attribute data (property) in the encrypted data.

The attribute data indicates the attribute of the particular contents most clearly. A genre of the contents (sports, movie, education etc.), a type of the contents (image, music, program etc.), a distribution mode of the contents (free, pay, time-limited etc.), and a condition of transaction (day of transaction, transacting user's name or user's ID) give good examples of the attribute data.

This attribute data is described using a self-definable language such as XML (extensible Markup Language). On this account, it is significantly easy to append new information to the attribute data.

The key used in the process of encryption and a corresponding decryption key are issued by the service manager, and passed to the user after recorded in the member card KC. These keys are recorded in the user master 341 of the managing server 30.

Digital information is embedded in each contents so that information on a transaction process of the contents (information of the information service server 20 which distributes this contents may be included), situation of operation generated at the time of utilization of the contents at the user terminal 10 (log data indicating the situation such as decryption, installation, term of utilization etc.), situation of progress indicating history of progress (progress data indicating progress of a game etc.), situation of achievement of an event indicating the particular event is achieved (event data) etc. (these are the history of utilization of contents) are automatically transmitted at a predetermined timing while the user terminal 10 is connected with the managing server 30. The above timing is, for example, the time of booting the user terminal 10 or the time of activation of contents, or the time when a number of times of utilization of contents reaches a predetermined count, or the time of a termination process of the contents.

The digital information forms various configurations such as a program giving a predetermined function to the user terminal 10 by itself, a function recalling a function of a device such as the user terminal 10 etc., and data. Thus, because the digital information described above has a wide variety, this digital information is generically referred to as a middleware in this embodiment.

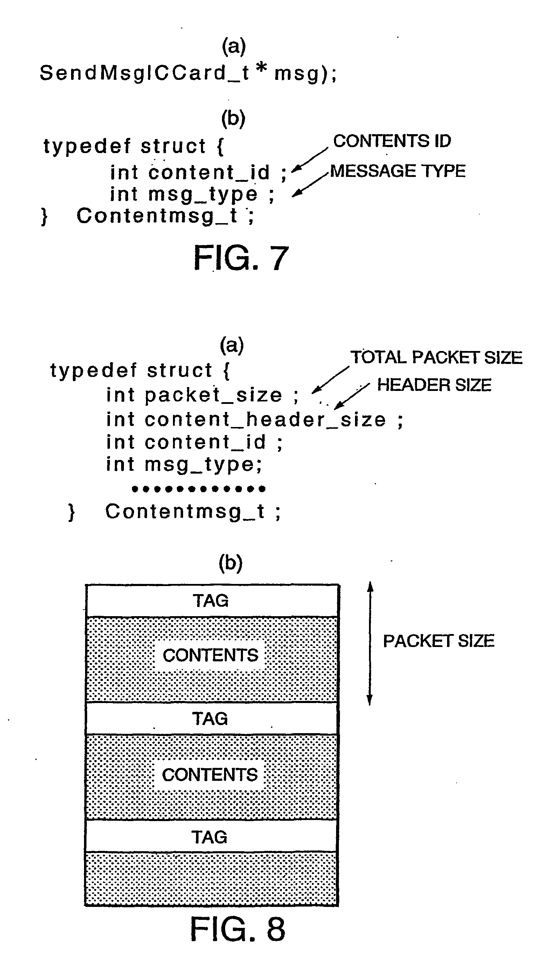

For example, in the case that the contents is a game program, the middleware has a function of embedding a message call (function and parameter) in the member card KC by recalling a library provided from the service manager. Such examples of the function are shown in Fig.7. An example of the function is shown at (a), and an example of the parameter is shown at (b).

In the case that the contents is a kind of a data format such as a digitized image or music, a contents tag which can be interpreted by an decoder operating on the user terminal 10 is embedded in the top part of the contents as shown at (b) in Fig. 8. In Fig. 8, (a) shows a concrete example of such content tag. The user terminal 10 operates so as to record a message to the member card KC after viewing this contents tag.

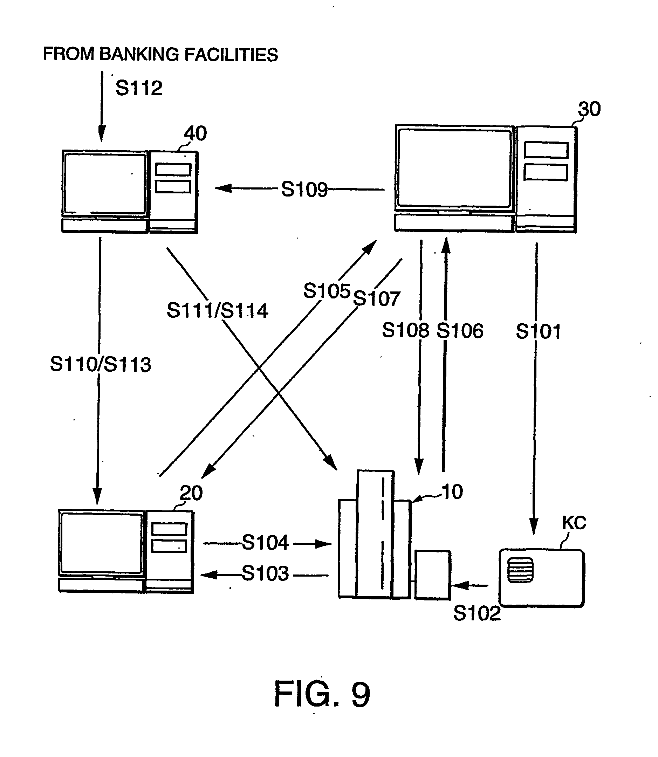

Assuming the above-described point, a total flow of operation will be described with reference to Fig.9.

The user who is going to enjoy a benefit gained by utilization of contents takes the procedures of a member registration through the managing server 30. On the member registration, the user inputs information such as user's name, street address, contact address, a serial number of the user terminal in use, etc. After accepting the member registration, the service manager issues the member card KC in which the user ID, the terminal ID, and the decryption key necessary for utilization of contents etc. are recorded (Step S101). Moreover, the contents distributor registers his/her own contents distributor ID and the ID of the information service server 20 to the master DB (the user master DB 341 and the terminal master 342) of the managing server 30. The contents creator registers information such as his/her own contents creator ID, etc. to the settlement operation server 40.

The user loads this member card KC to the user terminal 10 operated by him/herself (Step S102). The user sends a request for contents distribution to any of the information service servers 20 beforehand or after receiving the member card KC (Step S103).

After receiving the request, the information service server 20 distributes to the user the contents with the above-described middleware being embedded, while the information service server 20 informs the managing server 30 of the user as a distribution destination, the contents, the history of distribution, and the status of giving/receiving money, etc (Step S104). Moreover, the information service server 20 records the contents ID for identifying the distributed contents to the contents DB 241, the user ID of the user who is a destination of distribution to the user DB 242, and the history of distribution to the master DB 243.

The managing server 30 stores this information in the master DB 34.

The user loads the contents to the user terminal 10 while the member card KC is loaded to the user terminal 10, and the user utilizes these contents.

Prior to utilization of contents, the authentication function part of the member card KC and the main control portion 13 of the user terminal 10 jointly execute an authentication. This authentication is basically the user authentication, and this user authentication is executed whether the user is the pre-registered member or not, by determining whether the user ID or the user's name recorded in the member card KC coincides with the user ID or the user's name included in the attribute data of the contents or not. And only when these data coincide with each other, the decryption key is allowed to be utilized. To authenticate more strictly, further determination may be executed whether the contents is transacted properly or not. This determination can be executed by determining whether the history of transaction recorded in the member card KC coincides with the history of transaction included in the above attribute data or not. If the available user terminal 10 must be restricted to the pre-registered one, it is preferable to record the terminal ID in the attribute data of the contents and to record the terminal ID in the member card KC.

If the authentication is validated, then the contents are allowed to be utilized. And, after the contents is allowed to be utilized, the middleware embedded in this contents let the user terminal 10 communicate with the member card KC at the timing predetermined at the time of creation of the contents, and let the history of utilization of contents store in the data recording area of the member card KC (Step S105).

The history of utilization of contents in this embodiment is not a single history recorded at a time of transaction of contents, a time of decryption, or a time of installation as conventionally used, but is stored permanently as long as the contents is utilized.

For example, if the target contents is a game program (contents ID: C0001), and the user (user ID: 12345) plays this contents on the day yy/zz/xx (xx: year, yy: month, zz: day) using user's user terminal 10 (terminal ID: 54321), the log data indicating the condition of utilization in the history of utilization of contents is described as follows:
"User ID: 12345
Terminal ID: 54321
Contents ID: C001
Playing Date: yy/zz/xx"
Such log data is generated as long as the user plays these contents.

Also, if the contents is already archived and encrypted, the user terminal 10 installs this contents in the local storage device 11 through decrypting the contents using the decryption key in the member card KC. At the installation of the contents, a digital key necessary for an activation of the contents and the property described in the contents archive are recorded in the member key KC. In this case, the history of utilization of contents is an installation log indicating the date of installation and the property of the contents (variety and so on). After that, the user terminal 10 activates the contents with the member card KC loaded to the user terminal 10, and perfectly decrypts and executes the contents in the local storage device 11 while inquiring the recorded information of the member card KC as needed. In the member card KC the fact of activating contents, message to the member card KC etc. are recorded successively.

Because the operation described above is executed in the background independent of utilization of contents, the user cannot suspect the procedure.

The middleware transmit the stored log data to the managing server 30 via the user terminal 10 as needed, on the basis of a confirmation that the user terminal 10 is connected with the internet L (Step S106).

The managing server 30 classifies details of information transmitted from the user terminal 10 at the master managing portion 33, and stores the classified details in the corresponding master of the master DB 34. After that, the managing server 30 generates a variety of information of utilization described above at a proper timing, based on the information stored in the master DB 34, and distributes the variety of information of utilization to the contents distributor and the user. In the case that the information of utilization is distributed online, this information of utilization is distributed to the contents distributor and the user along with the predetermined message (Step S107, S108). Moreover, the managing server 30 executes counting and charging operation periodically, and sends the results to the settlement operation server 40. The managing server 30 checks whether an unregistered data is existed or not, and if the unregistered data is determined to be existed, the managing server 30 executes operations for registration (Step S109).

The settlement operation server 40 determines the royalty per each contents distributor based on the charging rule, and issues the debit note on-line to the corresponding contents distributor (Step S110). And, in the case that fees of such as utilization etc. arises according to the charging rule, the settlement operation server 40 issues the debit note on-line to the corresponding user (Step S111). In the case that the contents distributor does not operate the information service server 20 directly, the debit note is forwarded by post. As is the case with the contents creator (in the case that the contents creator operates the device which can communicate with the internet L, the settlement operation server 40 issues the debit note on-line to this device).

As described above, in the contents distribution system according to the preferred embodiment, the managing server 30 for collecting information is equipped on the internet L which every user terminals utilizing contents can connect to, and the contents is distributed to the user terminal 10 with the middleware for transmitting the history of distribution and utilization of contents to the managing server 30 embedded in the contents, and the managing server 30 generates the information indicating how much the particular contents is distributed based on the collected history of distribution of contents and determines the necessary fees. Thus, the fees arisen at the time of distribution or utilization of contents can be determined properly without spoiling the versatility of the operation of the user terminal 10, and without subsequently identifying the destination of distribution of the program etc. before transmitting the program.

Moreover, since it is sufficient to prepare the middleware which can achieve the necessary function on the user terminal 10 per each content and to embed the middleware to the contents in response to the demand, the flexible response can be accomplished even if the type or the distribution mode of the contents varies widely.

And, according to the preferred embodiment, since the member card KC is issued to manage the personal information in conjunction with other information, it is easy to execute the operation of charging and settlement toward the user. Furthermore, since the utilization condition of contents per each user can be figured out, a variety of analyzing results such as user's preference can be offered as service information.

Moreover, since all of the information necessary for charging operation are collected and stored in the database (master DB 34, contents DB 241, user DB 242, distribution history DB 243, utilization history DB 244, and settlement DB 44) automatically, in other words, without manpower, the operation cost of the total system can be restrained to a lower level. This cost reduction leads to the reflection in terms of discount to the side of the customer of those services.

With regard to the copyright problems, since the utilization condition of the contents can be grasped successively, this system has an advantage that it is easy and accurate to calculate and collect royalties.

### <Modification of the preferred embodiment>

While the present invention has been described in terms of the preferred embodiment and the modifications thereof, the invention is not to be limited thereto, but can be embodied in various ways without departing from the definiton of the invention as specified in the appended claims. For example, in the preferred embodiment described above, the necessary information is transmitted/received via the internet L at the time of online operation. On the other hand, it may be arranged that the system can be operated via the network other than the internet. Moreover, it may also be arranged that the contents can be dealt offline by recording the contents in a portable recording medium such as CD-ROM, DVD-ROM etc. while the contents is dealt online to record the recording medium such as HDD etc. of the client terminal 10. In the recording medium, the contents recording area in which the contents is recorded and the exclusive area in which the above-described middleware operated in cooperation with the contents is recorded, are generated. The transaction history data recording area may be generated in which the data of transaction history is recorded, when necessary. This area is generated at the position accessible at the time of booting or rebooting. With this arrangement, it is possible to determine properness of the contents before reading out these contents.

As described above, according to the present invention, a method for managing fees of contents and a system for managing fees of contents can be provided in which the fees arising from distributing or utilizing contents can be managed properly.

## Claims

1. A method for managing fees of contents in which the fees arise based on a predetermined charging rule upon utilizing the contents, said method comprising the steps of:
issuing a recording medium (KC) to a user operating a user terminal (10) which carries out information processing by utilizing said contents, said recording medium (KC) having a data recording area in which user identification data is recorded and a nonvolatile memory area; and
equipping information gathering means (30) on a network (L) with which said user terminal (10) with said recording medium (KC) being loaded is allowed to connect;
**characterized in that** the method further includes the steps of:
embedding digital information to said contents;
processing a plurality of said contents, in each of which digital information is embedded, to one archive data;
encrypting said archive data and adding an attribute data to the encrypted archive data;
distributing said archive data and attribute data through a predetermined distribution frame;
the step of embedding digital information to said contents comprises: said digital information itself causing said user terminal (10) to store a contents utilizing history indicating utilizing condition of the contents to said nonvolatile memory area of said recording medium (KC), with said contents utilizing history being stored permanently as long as said contents is utilized, and to read said stored contents utilizing history so as to automatically transmit said contents utilizing history to said information gathering means (30) along with said user identification data at:a predetermined timing while said user terminal (10) is connected with said network (L);
counting a utilization condition of the contents per user based on the contents utilizing history and the user identification data gathered through said information gathering means (30); and
determining a charging amount per user based on said counted utilization condition and a charging rule for said contents.

2. The method for managing fees of contents according to claim 1, further comprising the steps of encrypting the contents to be distributed and issuing key information for decrypting said encrypted contents, said key information being recorded in said recording medium (KC).

3. A system for managing fees of contents in which the fees arise based on a predetermined charging rule upon utilizing the contents, said system comprising:
issuing means (30) for issuing a recording medium (KC) to a user operating a user terminal (10) which carries out information processing by utilizing said contents, said recording medium (KC) having a data recording area in which user identification data is recorded and a nonvolatile memory area; and
information gathering means (30) provided on a network (L) with which said user terminal (10) with said recording medium (KC) being loaded is allowed to connect;
**characterized by**
distributing means (20) for embedding digital information to said contents, for processing a plurality of said contents, in each of which digital information is embedded, to one archive data, for encrypting said archive data and adding an attribute data to the encrypted archive data, and for distributing said archive data and attribute data through a predetermined distribution frame;
identification information holding means (30) for holding identification information for identifying said distributed contents;
said digital information itself causing said user terminal (10) to store a contents utilizing history indicating utilizing condition of the contents to said nonvolatile memory area of said recording medium (KC), with said contents utilizing history being stored permanently as long as said contents is utilized, and to read said stored contents utilizing history so as to automatically transmit said contents utilizing history to said information gathering means (30) along with said user identification data at a predetermined timing while said user terminal (10) is connected with said network (L);
counting means (30) for counting a utilization condition of the contents per user based on the contents utilizing history and the user identification data gathered through said information gathering means (30) and the identification information held by said identification information holding means (30); and
fee calculating means (30) for determining a charging amount per user based on said counted utilization condition and a charging rule for said contents.

4. The system for managing fees of contents according to claim 3, wherein said recording medium (KC) is a card equipped with an IC chip, said card being individualized per user, and information indispensable for utilizing said contents is recorded in said card.

## Patentansprüche

1. Verfahren zum Verwalten von Gebühren von Inhalten, wobei die Gebühren auf der Grundlage einer vorbestimmten Rechnungsstellungsregel beim Verwenden der Inhalte entstehen, wobei das Verfahren die Schritte umfasst, dass
ein Aufzeichnungsmedium (KC) an einen Benutzer ausgegeben wird, der ein Benutzerendgerät (10) betätigt, das eine Informationsverarbeitung ausführt, indem die Inhalte verwendet werden, wobei das Aufzeichnungsmedium (KC) einen Datenaufzeichnungsbereich, in dem Benutzeridentifikationsdaten aufgezeichnet werden, und einen Bereich eines nichtflüchtigen Speichers aufweist; und
ein Informationserfassungsmittel (30) an einem Netz (L) eingerichtet wird, mit dem das Benutzerendgerät (10) mit dem geladenen Aufzeichnungsmedium (KC) verbunden werden kann;
**dadurch gekennzeichnet, dass** das Verfahren ferner die Schritte umfasst, dass
eine digitale Information in die Inhalte eingebettet wird;
mehrere der Inhalte, in denen jeweils eine digitale Information eingebettet ist, zu Archivdaten verarbeitet werden;
die Archivdaten verschlüsselt werden und den verschlüsselten Archivdaten Attributdaten hinzugefügt werden;
die Archivdaten und Attributdaten über einen vorbestimmten Verteilungs-Frame verteilt werden;
wobei der Schritt des Einbettens einer digitalen Information in die Inhalte umfasst, dass die digitale Information selbst bewirkt, dass das Benutzerendgerät (10) einen Inhaltsverwendungsverlauf, der einen Verwendungszustand der Inhalte angibt, in den Bereich eines nichtflüchtigen Speichers des Aufzeichnungsmediums (KC) speichert, wobei der Inhaltsverwendungsverlauf permanent gespeichert wird solange die Inhalte verwendet werden, und den gespeicherten Inhaltsverwendungsverlauf liest, um den Inhaltsverwendungsverlauf zusammen mit den Benutzeridentifikationsdaten bei einem vorbestimmten Timing, während das Benutzerendgerät (10) mit dem Netz (L) verbunden ist, automatisch an das Informationserfassungsmittel (30) zu übertragen;
ein Verwendungszustand der Inhalte für jeden Benutzer auf der Grundlage des Inhaltsverwendungsverlaufs und der Benutzeridentifikationsdaten, die durch das Informationserfassungsmittel (30) erfasst werden, gezählt wird; und
ein Rechnungsbetrag für jeden Benutzer auf der Grundlage des gezählten Verwendungszustands und einer Rechnungsstellungsregel für die Inhalte ermittelt wird.

2. Verfahren zum Verwalten von Gebühren von Inhalten nach Anspruch 1, das ferner die Schritte umfasst, dass die zu verteilenden Inhalte verschlüsselt werden und eine Schlüsselinformation zum Entschlüsseln der verschlüsselten Inhalte ausgegeben wird, wobei die Schlüsselinformation auf dem Aufzeichnungsmedium (KC) aufgezeichnet wird.

3. System zum Verwalten von Gebühren von Inhalten, wobei die Gebühren auf der Grundlage einer vorbestimmten Rechnungsstellungsregel beim Verwenden der Inhalte entstehen, wobei das System umfasst:
ein Ausgabemittel (30) zum Ausgeben eines Aufzeichnungsmediums (KC) an einen Benutzer, der ein Benutzerendgerät (10) betätigt, das eine Informationsverarbeitung ausführt, indem die Inhalte verwendet werden, wobei das Aufzeichnungsmedium (KC) einen Datenaufzeichnungsbereich, in dem Benutzeridentifikationsdaten aufgezeichnet sind, und einen Bereich eines nichtflüchtigen Speichers aufweist; und
ein Informationserfassungsmittel (30), das an einem Netz (L) bereitgestellt ist, mit dem das Benutzerendgerät (10) mit dem geladenen Aufzeichnungsmedium (KC) verbunden werden kann;
**gekennzeichnet durch**
ein Verteilungsmittel (20), um eine digitale Information in die Inhalte einzubetten, um mehrere der Inhalte, in denen jeweils eine digitale Information eingebettet ist, zu Archivdaten zu verarbeiten, um die Archivdaten zu verschlüsseln und den verschlüsselten Archivdaten Attributdaten hinzuzufügen, und um die Archivdaten und Attributdaten über einen vorbestimmten Verteilungs-Frame zu verteilen;
ein Identifikationsinformations-Haltemittel (30) zum Halten einer Identifikationsinformation zum Identifizieren der verteilten Inhalte;
wobei die digitale Information selbst bewirkt, dass das Benutzerendgerät (10) einen Inhaltsverwendungsverlauf, der einen Verwendungszustand der Inhalte angibt, in dem Bereich eines nichtflüchtigen Speichers des Aufzeichnungsmediums (KC) speichert, wobei der Inhaltsverwendungsverlauf permanent gespeichert wird solange die Inhalte verwendet werden, und den gespeicherten Inhaltsverwendungsverlauf liest, um den Inhaltsverwendungsverlauf zusammen mit den Benutzeridentifikationsdaten bei einem vorbestimmten Timing, während das Benutzerendgerät (10) mit dem Netz (L) verbunden ist, automatisch an das Informationserfassungsmittel (30) zu übertragen;
ein Zählmittel (30) zum Zählen eines Verwendungszustands der Inhalte für jeden Benutzer auf der Grundlage des Inhaltsverwendungsverlaufs und der Benutzeridentifikationsdaten, die **durch** das Informationserfassungsmittel (30) erfasst werden, und der Identifikationsinformation, die **durch** das Identifikationsinformations-Haltemittel (30) gehalten wird; und
ein Gebührenberechnungsmittel (30) zum Ermitteln eines Rechnungsbetrags für jeden Benutzer auf der Grundlage des gezählten Verwendungszustands und einer Rechnungsstellungsregel für die Inhalte.

4. System zum Verwalten von Gebühren von Inhalten nach Anspruch 3, wobei das Aufzeichnungsmedium (KC) eine mit einem IC-Chip ausgestattete Karte ist, die Karte für jeden Benutzer individualisiert ist und eine Information, die zum Verwenden der Inhalte unentbehrlich ist, auf der Karte aufgezeichnet ist.

## Revendications

1. Procédé pour gérer des taxes sur des contenus, dans lequel les taxes sont dues en se basant sur une règle de facturation prédéterminée quand on utilise les contenus, ledit procédé comprenant les étapes consistant à :
fournir un support d'enregistrement (KC) à un utilisateur qui fait fonctionner un terminal utilisateur (10) et qui effectue des traitements d'informations en utilisant lesdits contenus, ledit support d'enregistrement (KC) comprenant une zone d'enregistrement de données dans laquelle sont enregistrées des données d'identification utilisateur, et une zone mémoire non volatile ; et
équiper des moyens de récolte d'informations (30) sur un réseau (L) auquel ledit terminal utilisateur (10) dans lequel ledit support d'enregistrement (KC) est chargé est autorisé à se connecter ;
**caractérisé en ce que** le procédé inclut en outre les étapes consistant à :
intégrer des informations numériques dans lesdits contenus ;
traiter une pluralité desdits contenus, dans chacun desquels sont intégrées les informations numériques, pour former des données d'archives ;
crypter lesdites données d'archives et ajouter une donnée d'attribut aux données d'archives cryptées ;
distribuer lesdites données d'archives et ladite donnée d'attribut via un réseau de distribution déterminé ;
l'étape d'intégration d'informations numériques dans lesdits contenus comprend : lesdites informations numériques elles-mêmes amènent ledit terminal utilisateur (10) à stocker un historique d'utilisation de contenus indiquant les conditions d'utilisation des contenus dans ladite zone mémoire non volatile dudit support d'enregistrement (KC), ledit historique d'utilisation de contenus étant stocké de façon permanente aussi longtemps que lesdits contenus sont utilisés, et à lire ledit historique d'utilisation de contenus stocké de manière à transmettre automatiquement ledit historique d'utilisation de contenus auxdits moyens de récolte d'informations (30), ensemble avec lesdites données d'identification utilisateur, à une temporisation prédéterminée alors que ledit terminal utilisateur (10) est connecté audit réseau (L) ;
compter une condition d'utilisation des contenus par utilisateur en se basant sur l'historique d'utilisation de contenus et les données d'identification utilisateur récoltées via les moyens de récolte d'informations (30) ; et
déterminer une valeur taxée par utilisateur en se basant sur ladite condition d'utilisation comptée et sur une règle de facturation pour lesdits contenus.

2. Procédé pour gérer des taxes sur des contenus, selon la revendication 1, comprenant en outre les étapes consistant à crypter les contenus à distribuer et fournir des informations clés pour décrypter lesdits contenus cryptés, lesdites informations clés étant enregistrées sur ledit support d'enregistrement (KC).

3. Système pour gérer des taxes sur des contenus, dans lequel les taxes sont dues en se basant sur une règle de facturation prédéterminée quand on utilise les contenus, ledit système comprenant :
des moyens de fourniture (30) pour fournir un support d'enregistrement (KC) à un utilisateur qui fait fonctionner un terminal utilisateur (10) et qui effectue des traitements d'information en utilisant lesdits contenus, ledit support d'enregistrement (KC) comprenant une zone d'enregistrement de données dans laquelle sont enregistrées des données d'identification utilisateur, et une zone mémoire non volatile ; et
des moyens de récolte d'informations (30), prévus sur un réseau (L) auquel ledit terminal utilisateur (10) dans lequel ledit support d'enregistrement (KC) est chargé est autorisé à se connecter ;
**caractérisé par**
des moyens de distribution (20) pour intégrer des informations numériques dans lesdits contenus, pour traiter une pluralité desdits contenus, dans chacun desquels les informations numériques sont intégrées, pour former des données d'archives, pour crypter lesdites données d'archives et ajouter une donnée d'attribut aux données d'archives cryptées, et pour distribuer lesdites données d'archive et ladite donnée d'attribut via un réseau de distribution prédéterminé ;
des moyens porteurs d'informations d'identification (30) pour porter des informations d'identification afin d'identifier lesdits contenus distribués ;
lesdites informations numériques elles-mêmes amenant ledit terminal utilisateur (10) à stocker un historique d'utilisation de contenus utilisant les conditions d'utilisation des contenus dans ladite zone mémoire non volatile dudit support d'enregistrement (KC), ledit historique d'utilisation de contenus étant stocké de façon permanente aussi longtemps que lesdits contenus sont utilisés, et à lire ledit historique d'utilisation de contenus stocké de manière à transmettre automatiquement ledit historique d'utilisation de contenus auxdits moyens de récolte d'informations (30), ensemble avec lesdites données d'identification utilisateur, à une temporisation prédéterminée alors que ledit terminal utilisateur (10) est connecté audit réseau (L) ;
des moyens de comptage (30) pour compter une condition d'utilisation des contenus par utilisateur en se basant sur l'historique d'utilisation de contenus et les données d'identification utilisateur récoltées via lesdits moyens de récolte d'informations (30) et les informations d'identification portées par lesdits moyens porteurs d'informations d'identification (30) ; et
des moyens de calcul de taxes (30) pour déterminer une valeur taxée par utilisateur en se basant sur ladite condition d'utilisation comptée et sur une règle de facturation pour lesdits contenus.

4. Système pour gérer des taxes sur des contenus, selon la revendication 3, dans lequel ledit support d'enregistrement (KC) est une carte équipée d'une puce à circuit intégré, ladite carte étant individualisée par utilisateur, et des informations indispensables pour utiliser lesdits contenus sont enregistrées dans ladite carte.
